## Europäisches Patentamt
## European Patent Office
## Office européen des brevets

(19)

(11) Veröffentlichungsnummer: **0 314 722**
**B1**

(12) **EUROPÄISCHE PATENTSCHRIFT**

(45) Veröffentlichungstag der Patentschrift: 07.11.90

(21) Anmeldenummer: 88903837.8

(22) Anmeldetag: 05.05.88

(86) Internationale Anmeldenummer:
PCT/EP88/00382

(87) Internationale Veröffentlichungsnummer:
WO 88/08942 17.11.88 Gazette 88/25

(51) Int. Cl.⁵: **F 24 B 9/00,** F 24 B 5/02,
F 23 L 9/00

(54) OFEN, INSBESONDERE ZUR VERBRENNUNG FESTER BRENNSTOFFE.

(30) Priorität: 06.05.87 DE 8706500 u

(43) Veröffentlichungstag der Anmeldung:
10.05.89 Patentblatt 89/19

(45) Bekanntmachung des Hinweises auf die
Patenterteilung:
07.11.90 Patentblatt 90/45

(84) Benannte Vertragsstaaten:
AT CH DE LI

(56) Entgegenhaltungen:
EP-A-0 046 152
EP-A-0 058 991
DE-A-2 602 811
DE-B-1 116 336
DE-C- 20 504
FR-A-2 500 912
US-A-4 444 127

(73) Patentinhaber: OEDEKOVEN, Wolf-Dieter
Pienzenauerstrasse 98
D-8000 München 81 (DE)
(73) Patentinhaber: NAGY, Johann
Kleeberger Strasse 10
D-8399 Ruhstorf (DE)

(72) Erfinder: NAGY, Johann
Kleeberger Strasse 10
D-8399 Ruhstorf (DE)

(74) Vertreter: Oedekoven, Wolf-Dieter, Dipl. Ing.
Erhardtstrasse 8/V
D-8000 München 5 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 314 722 B1

Courier Press, Leamington Spa, England.

**Beschreibung**

Die Erfindung bezieht sich auf einen Ofen, insbesondere zur Verbrennung fester Brennstoffe, der im Oberbegriff des Patentanspruchs 1 angegebenen Gattung.

Ein derartiger Ofen ist bekannt (EP-B 00 58 991). Dabei sind der Wärmetauscher zum Strömungsmittelerhitzen und die beiden Wärmetauscher zur Verbrennungsluftvorwärmung als kreisrunde oder im Querschnitt viereckige Hohlzylinder ausgebildet, welche koaxial zueinander und zu einem Ofengehäuse entsprechender Querschnittsgestalt angeordnet sind, das mit einer äußeren Wärmeisolierung versehen ist. Der den Wärmetauscher zum Strömungsmittelerhitzen bildende Hohlzylinder erstreckt sich waagerecht im Innenraum des Ofengehäuses zwischen dessen beiden Stirnwänden im Abstand von dem Boden, der Decke, den beiden Seitenwänden und den beiden Stirnwänden des Ofengehäuses und ist mit einer unteren, mittleren Öffnung versehen, durch welche hindurch die Asche aus der vom Hohlzylinder umschlossenen Brennkammer in eine Aschekammer gelangt, die unterhalb des Hohlzylinders innerhalb des Ofengehäuses vorgesehen ist. Die beiden die Wärmetauscher zur Verbrennungsluftvorwärmung bildenden Hohlzylinder erstrecken sich jeweils von der einen bzw. der anderen Stirnwand des Ofengehäuses waagerecht in das benachbarte Ende des den Wärmetauscher zum Strömungsmittelerhitzen bildenden Hohlzylinders hinein und weisen jeweils am inneren Ende eine obere bzw. untere Gruppe waagerechter Rohre mit je einer Reihe von entlang der Rohrlängsachse gleichmäßig verteilten, unteren Luftaustrittsbohrungen bzw. je einem entlang der Rohrlängsachse verlaufenden, unteren Luftaustrittsschlitz sowie am äußeren Ende einen unteren bzw. oberen Luftzufuhrstutzen auf, welcher aus dem Ofengehäuse ragt und an der äußeren Mündung mit einer zur Dosierung des Luftdurchsatzes verstellbaren Schwenkklappe versehen ist. Die oberen Rohre des einen Hohlzylinders erstrecken sich bis vor das innere Ende des anderen Hohlzylinders und dessen untere Rohre ragen bis über die untere, mittlere Öffnung des den Wärmetauscher zum Strömungsmittelerhitzen bildenden Hohlzylinders. Der Ringraum zwischen letzterem und dem Ofengehäuse ist durch eine mittlere, senkrechte Trennwand in zwei Hälften unterteilt, welche über die Aschekammer miteinander kommunizieren, die von der Trennwand nicht unterteilt wird.

Der erste Rauchgaskanal und der zweite Rauchgaskanal münden oberhalb des den Wärmetauscher zum Strömungsmittelerhitzen bildenden Hohlzylinders jeweils auf der einen bzw. auf der anderen Seite neben der Trennwand in die eine bzw. in die andere Ringraumhälfte. Die Querschnittsgrößen ihrer Mündungen in den anschließenden gemeinsamen Rauchgaskanal können mittels einer Schwenkklappe eingestellt werden, so daß das im gemeinsamen Rauchgaskanal angeordnete Gebläse entsprechend dosierte Rauchgasdurchsätze im ersten Rauchgaskanal und im zweiten Rauchgaskanal bewirkt.

In dem bekannten Ofen kann jeder beliebige feste Brennstoff verbrannt werden, insbesondere auch ein solcher mit einem verhältnismäßig hohen Feuchtigkeitsgehalt. Da ein gewisser Wassergehalt der verfeuerten festen Brennstoffe im Gegenteil sogar günstig ist, kann eine Einrichtung zum dosierten Wassereinsprühen in die Brennkammer vorgesehen sein, um den geringen Wassergehalt verhältnismäßig trockener Brennstoffe zu kompensieren. Um auch dann das jeweilige Strömungsmittel erhitzen zu können, wenn gerade kein fester Brennstoff zur Verfügung stehen sollte, kann ferner eine Einrichtung zum Einspritzen von Heizöl vorgesehen sein.

Der jeweilige Brennstoff verbrennt rauch-, qualm- und rußfrei mit farbloser oder bläulicher Flamme vollständig, so daß weder eine Verschmutzung des Ofens selbst noch eine Verschmutzung der Umwelt zu befürchten ist und der Energieinhalt des Brennstoffs optimal ausgenutzt wird, wobei keinerlei Nachverbrennung erforderlich ist. Da der gemeinsame Rauchgaskanal nicht unbedingt an einen hohen Kaminschacht angeschlossen werden muß, kann der bekannte Ofen verfahrbar ausgebildet werden.

Das im Ofen erhitzte Strömungsmittel, insbesondere Wasser oder Luft, kann beispielsweise als Wärmeträger bei Zentralheizungsanlagen für Gebäude und zum Trocknen von Getreide oder dergleichen in landwirtschaftlichen Betrieben verwendet werden.

Der Erfindung liegt die Aufgabe zugrunde, einen Ofen, insbesondere zur Verbrennung fester Brennstoffe, der im Oberbegriff des Patentanspruchs 1 angegebenen Gattung zu schaffen, welcher noch einfacher aufgebaut ist, noch billiger hergestellt werden kann, eine noch bessere Verbrennung ohne jegliche unzulässige Emissionen in die Atmosphäre bei höchstmöglichem Wirkungsgrad gewährleistet und noch einfacher und genauer geregelt werden kann, und zwar gewünschtenfalls auch automatisch.

Diese Aufgabe ist durch die im kennzeichnenden Teil des Patentanspruchs 1 angegebenen Merkmale gelöst. Vorteilhafte Ausgestaltungen des erfindungsgemäßen Ofens sind in den restlichen Patentansprüchen angegeben.

Nachstehend sind drei Ausführungsformen des erfindungsgemäßen Ofens anhand von Zeichnungen beispielsweise beschrieben. Darin zeigen schematisch:

Fig. 1 die Ansicht der ersten Ausführungsform von vorne;

Fig. 2 den Längsschnitt entlang der Linie II-II in Fig. 1;

Fig. 3 den Querschnitt entlang der Linie III-III in Fig. 2;

Fig. 4 die Ansicht des Ofens gemäß Fig. 1 bis 3 von hinten;

Fig. 5 ein Blockschaltbild der elektrischen Regelschaltung des Ofens gemäß Fig. 1 bis 4;

Fig. 6 den Längsschnitt entsprechend demjenigen gemäß Fig. 2 der zweiten Ausführungsform;

Fig. 7 den Querschnitt entlang der Linie VII-VII in Fig. 6;

Fig. 8 die Ansicht des Ofens gemäß Fig. 6 und 7 von hinten;

Fig. 9 den Längsschnitt entsprechend demjenigen gemäß Fig. 2 der dritten Ausführungsform;

Fig. 10 den Querschnitt entlang der Linie X-X in Fig. 9; und

Fig. 11 die Ansicht des Ofens gemäß Fig. 9 und 10 von hinten.

In den dargestellten Öfen werden feste Brennstoffe verbrannt, um das in der Zentralheizungsanlage eines Gebäudes zirkulierende Wasser zu erhitzen. Sie weisen jeweils einen Wärmetauscher A zum Erhitzen dieses Strömungsmittels, zwei weitere Wärmetauscher B, C zur Vorwärmung der für die Verbrennung benötigten Luft, ein Gebläse D zum Rauchgasabziehen, mindestens ein Dosierorgan E für die Verbrennungsluft, ein Dosierorgan F für die Rauchgase, einen ersten Rauchgaskanal G, einen zweiten Rauchgaskanal H und einen gemeinsamen Rauchgaskanal I auf.

Der Wärmetauscher A zum Strömungsmittelerhitzen ist von einem kastenförmigen Ofengehäuse 1 gebildet, welches doppelwandig ausgebildet ist und einen doppelwandigen Boden 2, eine doppelwandige Decke 3, eine vordere Doppelwand 4, eine rückwärtige Doppelwand 5 sowie zwei seitliche Doppelwände 6, 7 aufweist, wobei die rückwärtige Doppelwand 5 am unteren Ende in der Mitte mit einem äußeren Strömungsmitteleinlaß 8 und die doppelwandige Decke 3 am vorderen Ende in der Mitte mit einem äußeren Strömungsmittelauslaß 9 versehen ist.

Der Innenraum 10 des mit einer äußeren Wärmeisolierung 11 versehenen Ofengehäuses 1 ist zur Brennstoffeingabe durch eine obere Öffnung 12 in der vorderen Doppelwand 4 hindurch zugänglich, welche mittels einer Tür 13 dicht verschlossen werden kann, ferner zur Ascheentnahme durch eine untere Öffnung 14 in der vorderen Doppelwand 4 hindurch, welche ebenfalls durch eine Tür 15 dicht verschlossen werden kann. Aus dem Innenraum 10 des Ofengehäuses 1 werden die Rauchgase an zwei voneinander entfernten Stellen durch den ersten Rauchgaskanal G bzw. den zweiten Rauchgaskanal H und den anschließenden gemeinsamen Rauchgaskanal I hindurch mittels des Gebläses D abgezogen, welches im gemeinsamen Rauchgaskanal I angeordnet ist und dem saugseitig das Dosierorgan F für die Rauchgase vorgeschaltet ist. Das Gebläse D wird von einem Elektromotor 16 angetrieben. Das Dosierorgan F ist von einer um eine Achse 17 drehbar gelagerten Schwenkklappe 18 gebildet, welche zur Einstellung der Querschnittsgrößen der beiden gebläseseitigen Mündungen des ersten Rauchgaskanals G und des zweiten Rauchgaskanals H in bzw. vor einem zum Gebläse D führenden, den gemeinsamen Rauchgaskanal I bildenden Rohr 19 verstellbar ist, so daß das Gebläse D entsprechend dosierte Rauchgasdurchsätze im ersten Rauchgaskanal G und im zweiten Rauchgaskanal H bewirkt.

Dem Innenraum 10 des Ofengehäuses 1 strömt die in den beiden Wärmetauschern B, C vorgewärmte Luft für die Verbrennung des Brennstoffs im Innenraum 10 durch zwei obere Rohre 20 und zwei untere Rohre 21 hindurch zu, welche sich jeweils waagerecht durch die rückwärtige Doppelwand 5 des Ofengehäuses 1 hindurch bis in den Bereich von dessen vorderer Doppelwand 4 erstrecken, an dem derselben benachbarten Ende verschlossen sind und im Innenraum 10 mindestens eine Reihe von entlang der Rohrlängsachse gleichmäßig verteilten, seitlichen Luftaustrittsbohrungen 22 aufweisen. Die beiden aus dem Ofengehäuse 1 nach außen ragenden Enden der gemeinsam in einer zum doppelwandigen Boden 2 und zur doppelwandigen Decke 3 des Ofengehäuses 1 parallelen Ebene verlaufenden oberen Rohre 20 zur Verbrennungsluftzufuhr und die beiden aus dem Ofengehäuse 1 ragenden Enden der gleichfalls gemeinsam in einer zum doppelwandigen Boden 2 und zur doppelwandigen Decke 3 des Ofengehäuses 1 parallelen Ebene verlaufenden unteren Rohre 21 zur Verbrennungsluftzufuhr sind über ein oberes T-Rohrstück 23 bzw. ein unteres T-Rohrstück 24 an einen gemeinsamen Verteiler 25 angeschlossen, welcher hinter der rückwärtigen Doppelwand 5 des Ofengehäuses 1 angeordnet, seinerseits an die beiden Wärmetauscher B, C zur Verbrennungsluftvorwärmung angeschlossen und mit dem Dosierorgan E bzw. den Dosierorganen E für die Verbrennungsluft versehen ist.

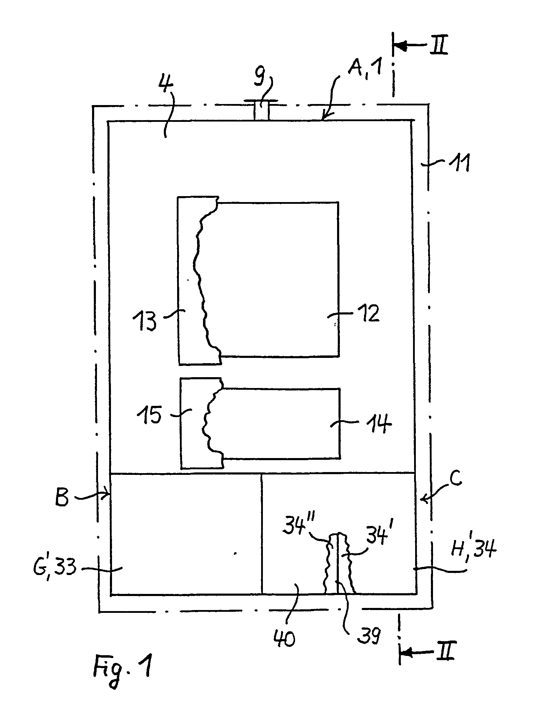

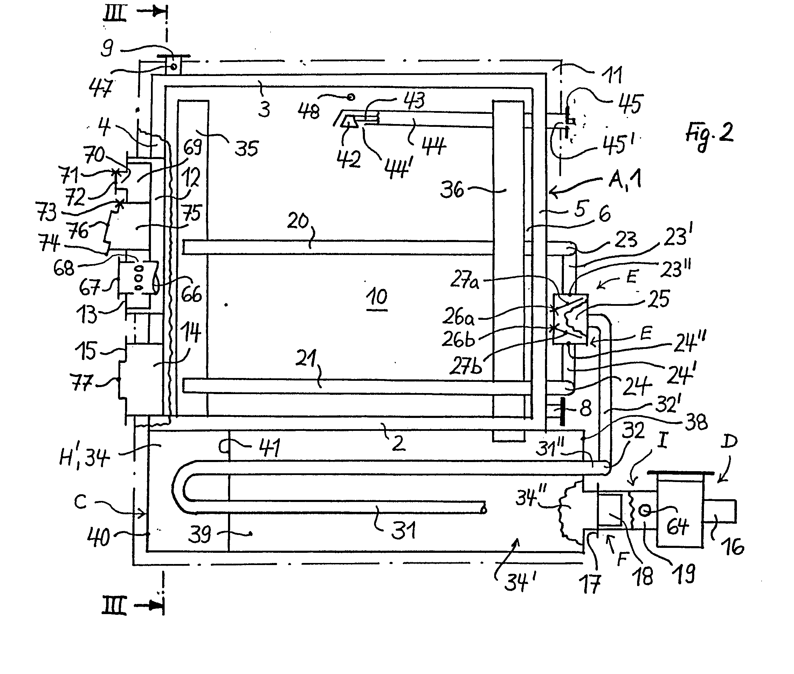

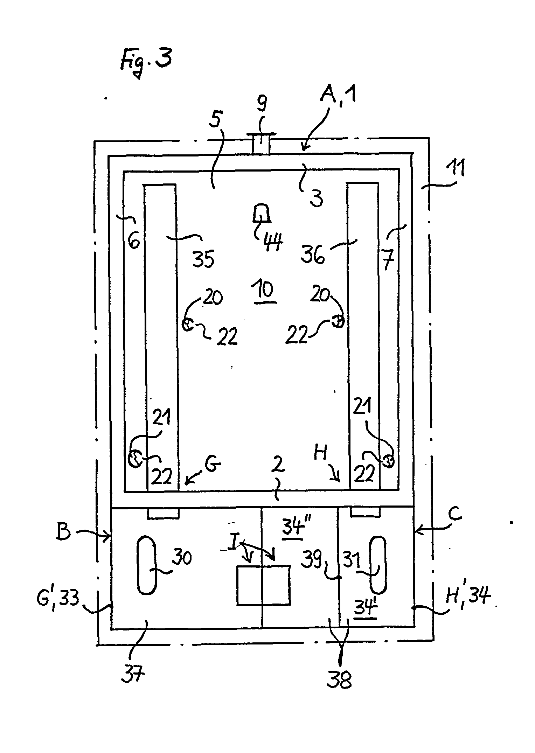

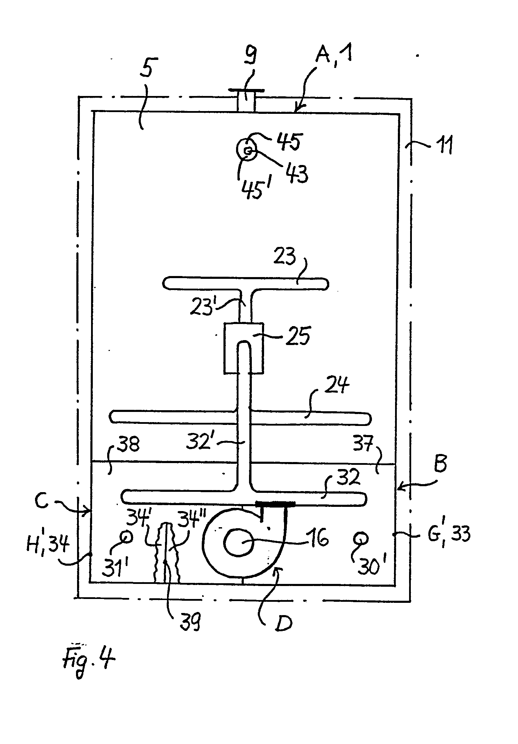

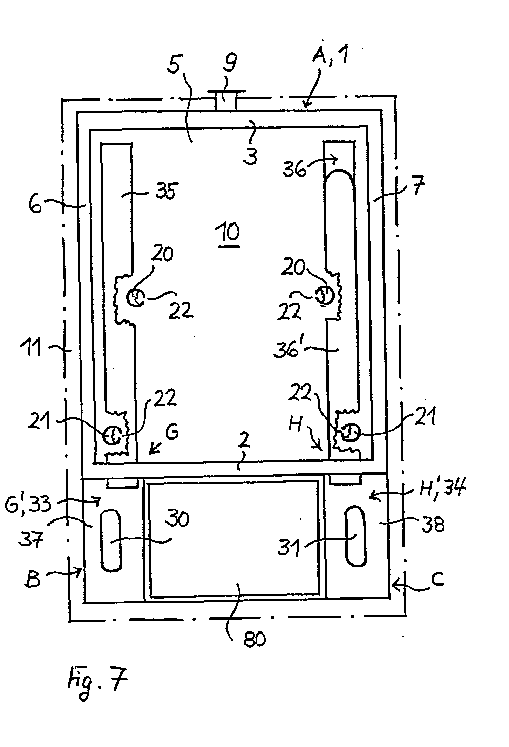

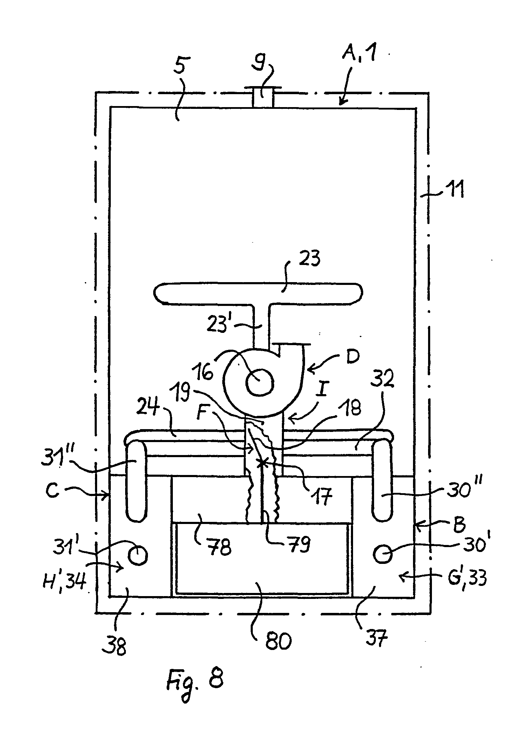

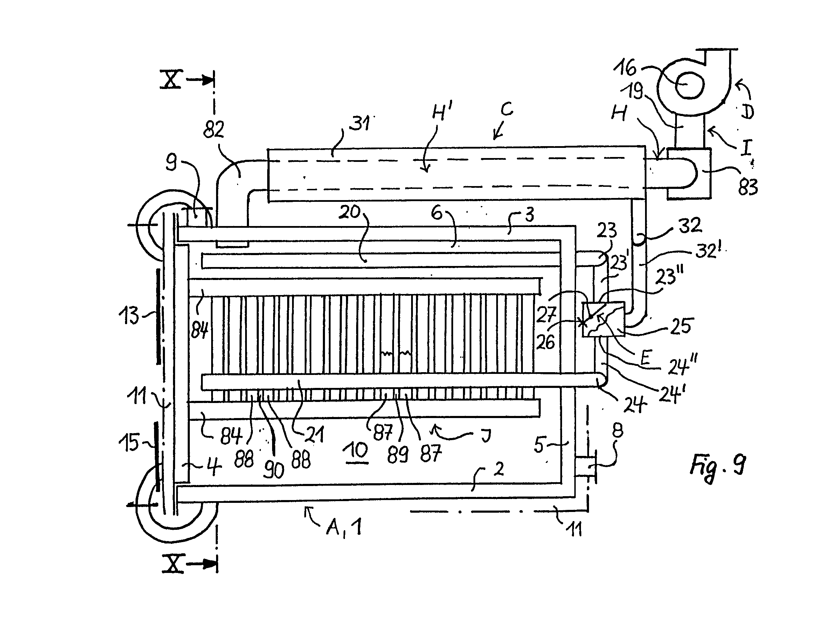

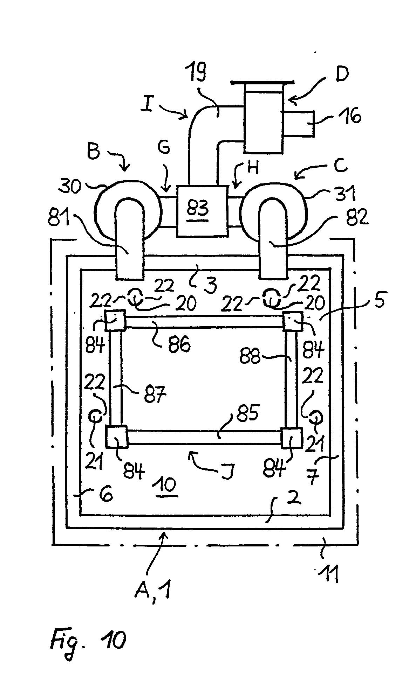

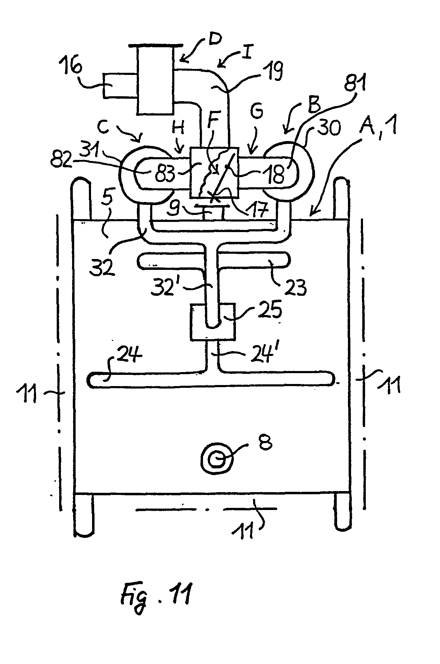

Die beiden T-Rohrstücke 23, 24 münden mit dem jeweiligen Mittelschenkel 23' bzw. 24' auf einander gegenüberliegenden Seiten in den Verteiler 25, welcher bei den beiden Öfen gemäß Fig. 1 bis 5 bzw. Fig. 6 bis 8 zwei Dosierorgane E für die Verbrennungsluft und beim Ofen gemäß Fig. 9 bis 11 ein Dosierorgan E für die Verbrennungsluft aufweist. Die beiden Dosierorgane E sind jeweils von einer um eine Achse 26a bzw. 26b drehbar gelagerten Schwenkklappe 27a bzw. 27b gebildet, welche mit der Mündung 23'' des Mittelschenkels 23' des oberen T-Rohrstücks 23 bzw. mit der Mündung 24'' des Mittelschenkels 24' des unteren T-Rohrstücks 24 zusammenwirkt und bezüglich derselben zur Dosierung des Luftdurchsatzes in den beiden oberen Rohren 20 zur Verbrennungsluftzufuhr bzw. des Luftdurchsatzes in den beiden unteren Rohren 21 zur Verbrennungsluftzufuhr verstellbar ist. Auch das einzelne Dosierorgan E ist von einer um eine Achse 26 drehbar gelagerten Schwenkklappe 27 gebildet, welche allerdings sowohl mit der oberen Mittelschenkelmündung 23'' als auch mit der unteren Mittelschenkelmündung 24'' zusammenwirkt und bezüglich beider Mittelschenkelmündungen 23'', 24'' zur Dosierung sowohl des Luftdurchsatzes in den beiden oberen Rohren 20 zur Verbrennungsluftzufuhr als auch des Luftdurchsatzes in den beiden unteren Rohren 21 zur Verbrennungsluftzufuhr verstellbar ist.

Die beiden Wärmetauscher B, C zur Verbrennungsluftvorwärmung sind jeweils von einem Abschnitt G' des ersten Rauchgaskanals G bzw. einem Abschnitt H' des zweiten Rauchgaskanals

H sowie einem Luftführungsrohr 30 bzw. 31 gebildet, welches im Rauchgaskanalabschnitt G' bzw. H' angeordnet ist bzw. den Rauchgaskanalabschnitt G' bzw. H' mantelartig umschließt, am einen Ende mit der freien Atmosphäre kommuniziert und am anderen Ende mit dem Verteiler 25 verbunden ist. Dazu sind die beiden Luftführungsrohre 30, 31 an ein T-Rohrstück 32 angeschlossen, welches mit dem Mittelschenkel 32' zwischen den beiden Mittelschenkelmündungen 23'', 24'' der anderen T-Rohrstücke 23, 24 in den Verteiler 25 mündet.

Bei den beiden Öfen gemäß Fig. 1 bis 5 bzw. Fig. 6 bis 8 sind die beiden Wärmetauscher B, C zur Verbrennungsluftvorwärmung unterhalb des Ofengehäuses 1 angeordnet, um sich von dessen vorderer Doppelwand 4 zu dessen rückwärtiger Doppelwand 5 hin zu erstrecken, wobei sie jeweils einen äußeren Gehäusekasten 33 bzw. 34 aufweisen, welcher den zugehörigen Rauchgaskanalabschnitt G' bzw. H' bildet und das zugehörige Luftführungsrohr 30 bzw. 31 umschließt. Die beiden Gehäusekästen 33, 34 kommunizieren einerseits jeweils über ein Rohr 35 bzw. 36 mit dem Innenraum 10 des Ofengehäuses 1, welches in der Nähe der doppelwandigen Decke 3 des Ofengehäuses 1 in den Innenraum 10 mündet, und sind andererseits jeweils mit dem gemeinsamen Rauchgaskanal I verbunden, und zwar an dem der rückwärtigen Doppelwand 5 des Ofengehäuses 1 benachbarten Ende. Die beiden Luftführungsrohre 30, 31 sind jeweils U-förmig gebogen und erstrecken sich in Längsrichtung des zugehörigen Gehäusekastens 33 bzw. 34, um mit den beiden Enden 30', 30'' bzw. 31', 31'' durch dessen rückwärtige Stirnwand 37 bzw. 38 nach außen zu ragen, wobei die beiden unteren Enden 30', 31' der Luftführungsrohre 30, 31 mit der freien Atmosphäre kommunizieren, während ihre beiden oberen Enden 30'', 31'' an die beiden Seitenschenkel des T-Rohrstücks 32 angeschlossen sind.

Beim Ofen gemäß Fig. 1 bis 5 grenzen die beiden Gehäusekästen 33, 34 unmittelbar aneinander und verlaufen ihre beiden in den Innenraum 10 des Ofengehäuses 1 führenden Rohre 35, 36 jeweils geradlinig in der Ecke zwischen der vorderen Doppelwand 4 und der linken Doppelwand 6 des Ofengehäuses 1 bzw. in der Ecke zwischen der rückwärtigen Doppelwand 5 und der rechten Doppelwand 7 des Ofengehäuses 1, um neben der vorderen Doppelwand 4 bzw. neben der rückwärtigen Doppelwand 5 in den Innenraum 10 des Ofengehäuses 1 und an dem der vorderen Doppelwand 4 bzw. an dem der rückwärtigen Doppelwand 5 benachbarten Ende des zugehörigen Gehäusekastens 33 bzw. 34 in denselben zu münden. Dabei ist der rechte Gehäusekasten 34 mit einer senkrechten Trennwand 39 versehen, welche sich von seiner rückwärtigen Stirnwand 38 auf seine vordere Stirnwand 40 zu erstreckt und mit derselben eine Öffnung 41 begrenzt. Die Trennwand 39 unterteilt den Gehäusekasten 34 in zwei parallele Abteile 34', 34'', welche über die Öffnung 41 miteinander kommunizieren. In das eine Abteil 34' mündet das Rohr 36, über welches der Gehäusekasten 34 mit dem Innenraum 10 des Ofengehäuses 1 kommuniziert, während das andere Abteil 34'' mit dem zum Gebläse D führenden Rohr 19 verbunden ist, welches mittig von den beiden rückwärtigen Stirnwänden 37, 38 der Gehäusekästen 33, 34 absteht sowie ebenfalls mit dem linken Gehäusekasten 33 kommuniziert und in welchem die Schwenkklappe 18 zur Dosierung der Rauchgasdurchsätze im ersten Rauchgaskanal G und im zweiten Rauchgaskanal H angeordnet ist. Die Trennwand 39 gewährleistet, daß die über das Rohr 36 aus dem Innenraum 10 des Ofengehäuses 1 abgezogenen Rauchgase den rechten Gehäusekasten 34 vollständig durchströmen und nicht sofort in das Rohr 19 eintreten.

Der Ofen ist mit einer Einrichtung zum dosierten Wassereinsprühen in den die Brennkammer bildenden Innenraum 10 des Ofengehäuses 1 versehen, welche eine Einspritzdüse 42 aufweist, die als Flachstrahldüse ausgebildet und im Innenraum 10 nahe der doppelwandigen Decke 3 des Ofengehäuses 1 etwa in deren Mitte angeordnet ist, um einen flachen Wasserstrahl entlang der senkrechten Mittelebene zwischen den beiden seitlichen Doppelwänden 6, 7 des Ofengehäuses 1 zu versprühen. Die Einspritzdüse 42 wird über ein Rohr 43 mit Wasser beaufschlagt, welches durch die rückwärtige Doppelwand 5 des Ofengehäuses 1 hindurch in dessen Innenraum 10 ragt und zur Einspritzdüse 42 hin ansteigt, um bei Unterbrechung der Wasserzufuhr zur Einspritzdüse 42 jegliches Nachtropfen derselben zu vermeiden. Darüberhinaus werden die Einspritzdüse 42 und deren Rohr 43 gekühlt, wozu letzteres von einem Mantelrohr 44 umschlossen ist, welches sich einerseits bis über die Einspritzdüse 42 erstreckt sowie im Bereich derselben mit einer unteren Öffnung 44' versehen ist und welches andererseits aus dem Ofengehäuse 1 ragt sowie am äußeren Ende durch einen Ringflansch 45 verschlossen ist, durch den sich das Rohr 43 der Einspritzdüse 42 erstreckt und der mit einer kleinen Bohrung 45' versehen ist, um das Mantelrohr 44 mit Kühlluft zu beaufschlagen, welche durch die Bohrung 45' hindurch aus der freien Atmosphäre angesaugt wird, den Ringraum zwischen dem äußeren Mantelrohr 44 und dem inneren Rohr 43 durchströmt und durch die Öffnung 44' des Mantelrohrs 44 hindurch in den Innenraum 10 des Ofengehäuses 1 gelangt.

Weiterhin weist die Einrichtung zum dosierten Wassereinsprühen in den Innenraum 10 des Ofengehäuses 1 ein elektromagnetisch betätigbares Ventil 46 zur Steuerung der Wasserzufuhr zur Einspritzdüse 42 hin, zwei Sensoren 47, 48 zur Erfassung der Temperatur des aus dem doppelwandigen Ofengehäuse 1 austretenden Strömungsmittels bzw. der Temperatur im Innenraum 10 und eine elektrische Regelschaltung 49 auf. Das Ventil 46 ist eingangsseitig an eine Wasserquelle und ausgangsseitig an das Rohr 43 der Einspritzdüse 42 angeschlossen. Die beiden Sensoren 47, 48 sind jeweils im Strömungsmittelauslaß 9 bzw. oberhalb der Einspritzdüse 42 im Innenraum 10 des Ofengehäuses 1 angeordnet. Die elektrische Regelschaltung 49 ist eingangsseitig mit den beiden Sensoren 47, 48 und ausgangsseitig mit dem Ventil 46 der Einspritzdüse 42 verbunden, um es periodisch zu öffnen, so daß die Einspritzdüse 42 entsprechend pulsierend sprüht.

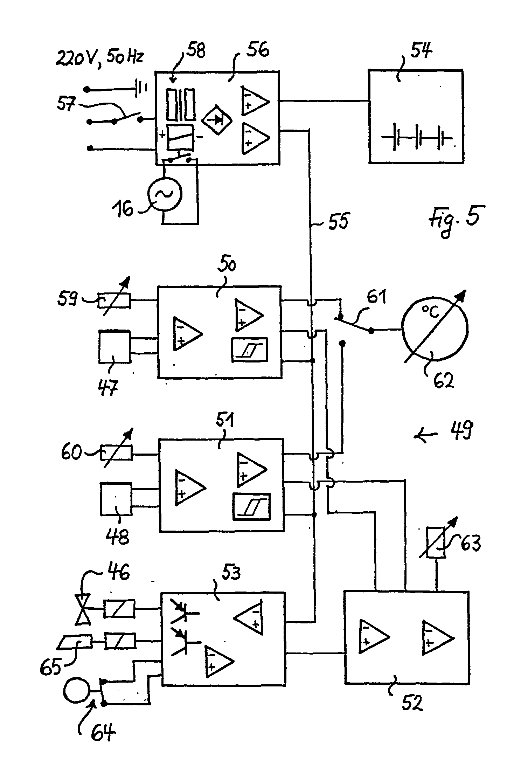

Gemäß Fig. 5 weist die elektrische Regelschaltung 49 zwei Verstärker 50, 51, einen Modulator 52 sowie eine Leistungsstufe 53 auf und wird sie vom Netz oder bei Netzausfall von einem 12 V-Akkumulator 54 gespeist, wozu die beiden Verstärker 50, 51 und die Leistungsstufe 53 über eine Leitung 55 mit einem Schaltkreis 56 verbunden sind, welcher ein mittels eines Schalters 57 einschaltbares, auch an den Elektromotor 16 des Gebläses D angeschlossenes Netzteil 58 umfaßt und mit dem Akkumulator 54 in Verbindung steht. Die beiden Verstärker 50, 51 sind jeweils eingangsseitig an den Sensor 47 zur Erfassung der tatsächlichen Strömungsmittelaustrittstemperatur sowie ein Einstellorgan 59 für die gewünschte Strömungsmittelaustrittstemperatur bzw. den Sensor 48 zur Erfassung der tatsächlichen Innenraumtemperatur sowie ein Einstellorgan 60 für die gewünschte Innenraumtemperatur und ausgangsseitig an je einem Eingang des Modulators 52 sowie je eine Klemme eines Schalters 61 angeschlossen, mittels welchem sie wahlweise mit einem Temperaturanzeiger 62 verbunden werden können. Der eingangsseitig ferner an ein Einstellorgan 63 für die Qualität des im Innenraum 10 des Ofengehäuses 1 jeweils verbrannten Brennstoffs angeschlossene Modulator 52 ist ausgangsseitig mit einem Eingang der Leistungsstufe 53 verbunden, welche ihrerseits ausgangsseitig an den Elektromagneten des Ventils 46 der Einspritzdüse 42 angeschlossen ist.

Die vom Modulator 52 angesteuerte Leistungsstufe 53 bewirkt, daß das Ventil 46 periodisch öffnet, wobei der Modulator 52 das Tastverhältnis entsprechend seinen Eingangssignalen einstellt und also ein Tastverhältnis entsprechend den jeweiligen Istwerten und den eingestellten Sollwerten der Strömungsmittelaustrittstemperatur sowie der Innenraumtemperatur unter Berücksichtigung der eingestelten Brennstoffqualität gewährleistet. Zusätzlich ist die Leistungsstufe 53 eingangsseitig an einen im gemeinsamen Rauchgaskanal I dem Gebläse D saugseitig vorgeschalteten, also in dem zum Gebläse D führenden Rohr 19 angeordneten Unterdruckschalter 64 und ausgangsseitig an den Elektromagneten eines elektromagnetisch betätigbaren Riegels 65 für die Tür 13 der Brennstoffeingabeöffnung 12 des Ofengehäuses 1 angeschlossen. Der Unterdruckschalter 64 ist im Betrieb normalerweise geschlossen und öffnet dann, wenn der Unterdruck im gemeinsamen Rauchgaskanal I vor dem Gebläse D bzw. im Rohr 19 einen vorgegebenen Mindestwert unterschreitet, beispielsweise beim Stillstand des Gebläses D infolge eines Netzausfalls, was zur Folge hat, daß das Ventil 46 der Einspritzdüse 42 dauernd geöffnet bleibt und letztere ununterbrochen Wasser in den Innenraum 10 des Ofengehäuses 1 sprüht, um die darin befindliche Glut zu löschen, und der Riegel 65 die Tür 13 sperrt, so daß die Brennstoffeingabeöffnung 12 des Ofengehäuses 1 nicht geöffnet werden kann.

Um den Ofen gewünschtenfalls auch mit Heizgas oder Heizöl betreiben zu können, ist die Tür 13 der Brennstoffeingabeöffnung 12 des Ofengehäuses 1 doppelwandig ausgebildet und mit einem Rohr 66 zur Aufnahme eines Gasoder Ölbrenners versehen. Das Rohr 66 durchsetzt die Tür 13, wobei die äußere Mündung mittels eines lösbaren Deckels 67 verschlossen ist, welcher beim Einbau des Gas- bzw. Ölbrenners entfernt wird. Weiterhin weist das Rohr 66 einen Kranz von Luftdurchtrittsöffnungen 68 auf, über welche es mit dem innere Hohlraum 69 der Tür 13 kommuniziert, die mit einer äußeren Luftansaugöffnung 70 versehen ist. Mit letzterer wirkt eine um eine waagerechte Achse 71 drehbar gelagerte Schwenkklappe 72 zusammen, welche die Luftansaugöffnung 70 beim Ofenbetrieb ohne Gas- bzw. Ölbrenner vollständig verschließt und beim Ofenbetrieb mit Gas- bzw. Ölbrenner zur Dosierung des Luftdurchsatzes verstellbar ist, wobei der Gas- bzw. Ölbrenner lediglich mit Heizgas bzw. Heizöl beaufschlagt wird und kein eigenes Gebläse zur Druckluftzufuhr aufweist.

Weiterhin ist die Tür 13 der Brennstoffeingabeöffnung 12 des Ofengehäuses 1 mit einer um eine waagerechte Achse 73 drehbar gelagerten Explosionsklappe 74 versehen, welche die äußere Mündung eines weiteren Rohres 75 verschließt, das den inneren Hohlraum 69 der Tür 13 durchsetzt und an deren Innenseite in den Innenraum 10 des Ofengehäuses 1 mündet. Die Explosionsklappe 74 sowie die Tür 15 der Ascheentnahmeöffnung 14 des Ofengehäuses 1 können jeweils mit einem durch ein Schauglas 76 bzw. 77 abgedeckten Fenster zur Beobachtung der im Innenraum 10 des Ofengehäuses 1 stattfindenden Verbrennung versehen sein.

Im Betrieb läuft das Gebläse D mit konstanter Drehzahl um, angetrieben durch den Elektromotor 16, um im Innenraum 10 des Ofengehäuses 1 einen Unterdruck von beispielsweise etwa 10 Millibar aufrechtzuerhalten. Der Innenraum 10 ist im Bereich unterhalb der Brennstoffeingabeöffnung 12 des Ofengehäuses 1 mit festem Brennstoff gefüllt, welcher darin verbrennt, wobei dem Brennstoffbett Verbrennungsluft über die beiden unteren Rohre 21 zur Verbrennungsluftzufuhr, welche sich oberhalb in der Nähe des doppelwandigen Bodens 2 des Ofengehäuses 1 neben dessen beiden seitlichen Doppelwänden 6, 7 erstrecken und jeweils auf der der benachbarten seitlichen Doppelwand 6 bzw. 7 abgewandten Seite mit einer Reihe von Luftaustrittsbohrungen 22 versehen sind, und dem Innenraum 10 weitere Verbrennungsluft über die beiden oberen Rohre 20 zur Verbrennungsluftzufuhr zuströmt, welche sich oberhalb des Brennstoffbettes in geringerem gegenseitigen Abstand als die unteren Rohre 21 erstrecken und auf den beiden einander zugewandten Seiten jeweils mit einer Reihe von Luftaustrittsbohrungen 22 versehen sind. Die über die oberen Rohre 20 zugeführte Verbrennungsluft gewährleistet, daß alle aus dem Brennstoffbett aufsteigenden Schwelgase im Innenraum 10 des Ofengehäuses 1 vollständig und vollkommen verbrannt werden.

Mit Hilfe der beiden Dosierorgane E für die Verbrennungsluft bzw. der beiden von Hand oder mittels eines Stellmotors verstellbaren Schwencklappen 27a, 27b und des Dosierorgans F für die Rauchgase bzw. der ebenfalls von Hand oder mittels eines Stellmotors verstellbaren Schwencklappe 18 läßt sich im Verein mit dem geschilderten Wassereinsprühen die Verbrennung im Innenraum 10 des Ofengehäuses 1 genau steuern, auch beim Anheizen, wie für eine einwandfreie Regelung des Ofenbetriebes zur Erzielung der jeweils gewünschten Austrittstemperatur des im doppelwandigen Ofengehäuse 1 erhitzten Strömungsmittels unter Gewährleistung praktisch vollkommen reiner Rauchgase sowie des höchstmöglichen Wirkungsgrades erforderlich.

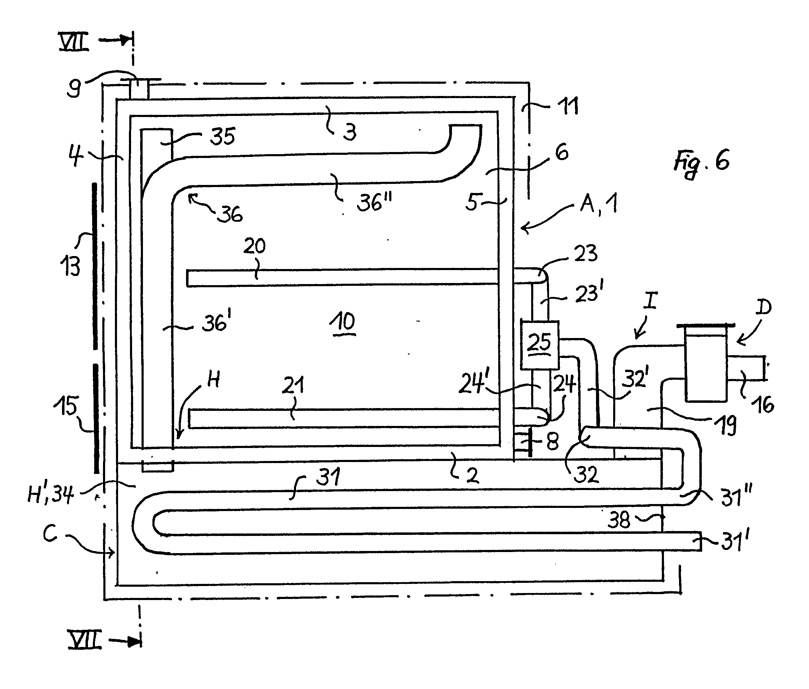

Der Ofen gemäß Fig. 6 bis 8 unterscheidet sich von demjenigen nach Fig. 1 bis 5 im wesentlichen nur dadurch, daß die beiden Wärmetauscher B, C zur Verbrennungsluftvorwärmung im Abstand voneinander angeordnet, identisch ausgebildet und ihre Gehäusekästen 33, 34 auf andere Weise an den Innenraum 10 des Ofengehäuses 1 sowie an den gemeinsamen Rauchgaskanal I angeschlossen sind. Auch das vom rechten Gehäusekasten 34 in den Innenraum 10 führende Rohr 36 mündet an dem der vorderen Doppelwand 4 des Ofengehäuses 1 benachbarten Ende des Gehäusekastens 34 in denselben, wobei es mit einem vom Gehäusekasten 34 senkrecht nach oben ragenden Abschnitt 36' und einem an diesen zum Rohr 35 des linken Gehäusekastens 33 parallelen Abschnitt 36' anschließenden waagerechten Abschnitt 36'' versehen ist, welcher sich entlang der doppelwandigen Decke 3 des Ofengehäuses 1 auf dessen rückwärtige Doppelwand 5 zu erstreckt, um neben derselben innen vor der doppelwandigen Decke 3 zu münden. Die beiden Gehäusekästen 33, 34 erstrecken sich unterhalb des doppelwandigen Bodens 2 des Ofengehäuses 1 jeweils entlang der einen Bodenseitenkante bzw. der anderen Bodenseitenkante von der vorderen Doppelwand 4 bis über die rückwärtige Doppelwand 5 des Ofengehäuses 1 hinaus und sind an den beiden rückwärtigen Enden durch ein Querrohr 78 miteinander verbunden, welches in der Mitte mit dem senkrecht nach oben abstehenden, zum Gebläse D führenden Rohr 19 kommuniziert und mit einer mittleren Trennwand 79 versehen ist, die in das Rohr 19 ragt und an welche die Schwenkklappe 18 anschließt, welche im Rohr 19 zur Dosierung der Rauchgasdurchsätze im ersten Rauchgaskanal G und im zweiten Rauchgaskanal H verstellbar ist.

Zwischen den beiden Wärmetauschern B, C zur Verbrennungsluftvorwärmung bzw. den beiden Gehäusekästen 33, 34 derselben ist ein längsbeweglicher Ascheaufnahmebehälter 80 angeordnet, welcher unter dem Ofengehäuse 1 unter dessen Ascheentnahmeöffnung 14 hervorgezogen werden kann, um nach Öffnen von deren Tür 15 die Asche aus dem Innenraum 10 des Ofengehäuses 1 in den Ascheaufnahmebehälter 80 hinein entfernen zu können. Letzterer kann als verschiebbarer Kasten oder verfahrbarer Wagen ausgebildet sein.

Der Ofen gemäß Fig. 9 bis 11 unterscheidet sich im wesentlichen nur dadurch von demjenigen nach Fig. 1 bis 5, daß die beiden Wärmetauscher B, C zur Verbrennungsluftvorwärmung oberhalb des Ofengehäuses 1 angeordnet sind, um sich von dessen vorderer Doppelwand 4 zu dessen rückwärtiger Doppelwand 5 hin zu erstrecken, und daß ein zusätzlicher Wärmetauscher J zum Strömungsmittelerhitzen vorgesehen ist, welcher sich im Innenraum 10 des Ofengehäuses 1 im Abstand von dessen Innenflächen erstreckt, die Brennkammer begrenzt und an das doppelwandige Ofengehäuse 1 angeschlossen ist, um von dem in demselben strömenden Strömungsmittel durchströmt zu werden. Dabei weisen die beiden Wärmetauscher B, C zur Verbrennungsluftvorwärmung jeweils ein inneres Rohr 81 bzw. 82 auf, welches den ersten Rauchgaskanal G bzw. den zweiten Rauchgaskanal H bildet, am einen Ende nahe der doppelwandigen Decke 3 des Ofengehäuses 1 neben dessen vorderer Doppelwand 4 in dessen Innenraum 10 mündet, am anderen Ende mit dem gemeinsamen Rauchgaskanal I in Verbindung steht und zwischen den beiden Enden vom zugehörigen Luftführungsrohr 30 bzw. 31 mantelartig umschlossen ist. Die rückwärtigen Enden der beiden zueinander parallelen Rohre 81, 82 münden auf einander gegenüberliegenden Seiten in einen mittleren Verteiler 83, welcher ferner mit dem senkrecht nach oben abstehenden, zum Gebläse D führenden Rohr 19 kommuniziert und in welchem die Schwenkklappe 18 zur Dosierung der Rauchgasdurchsätze im ersten Rauchgaskanal G und im zweiten Rauchgaskanal H angeordnet ist. Die beiden Luftführungsrohre 30, 31 kommunizieren an den der vorderen Doppelwand 4 des Ofengehäuses 1 benachbarten Enden mit der freien Atmosphäre und sind an den rückwärtigen Enden jeweils an den einen bzw. anderen Seitenschenkel des T-Rohrstücks 32 angeschlossen, welches zu dem mit dem Dosierorgan E für die Verbrennungsluft bzw. der von Hand oder mittels eines Stellmotors verstellbaren Schwenkklappe 27 versehenen Verteiler 25 führt.

Die vordere Doppelwand 4 des Ofengehäuses 1 ist als lösbarer Deckel ausgebildet, um den zusätzlichen Wärmetauscher J zum Strömungsmittelerhitzen einbauen zu können. Letzterer ist kastenförmig ausgebildet und weist vier Eckrohre 84 sowie vier Reihen zueinander paralleler Querrohre 85 bzw. 86 bzw. 87 bzw. 88 auf. Die Eckrohre 84 kommunizieren jeweils mit der vorderen Doppelwand 4 des Ofengehäuses 1, von welcher sie senkrecht abstehen, um waagerecht in den Innenraum 10 des Ofengehäuses 1 zu ragen. Ferner kommunizieren die Eckrohre 84 miteinander, und zwar die beiden unteren Eckrohre 84 über die untere Reihe von Querrohren 85, die beiden oberen Eckrohre 84 über die obere Reihe von Querrohren 86, die beiden linken Eckrohre 84 über die linke Reihe von Querrohren 87 und die beiden rechten Eckrohre 84 über die rechte Reihe von Querrohren 88, wobei die untere Reihe von Querrohren 85 einen Rost bildet, auf welchem der feste Brennstoff verbrennt und durch welchen hindurch die Asche in den unteren Bereich des Innenraums 10 des Ofengehäuses 1 fällt. Die beiden unteren Rohre 21 zur Verbrennungsluftzufuhr sind oberhalb dieser Reihe von Querrohren 85 in deren Nähe angeordnet, um sich jeweils zwischen der linken Reihe von Querrohren 87 und der benachbarten seitlichen Doppelwand 6 des Ofengehäuses 1 bzw. zwischen der rechten Reihe von Querrohren 88 und der benachbarten seitlichen Doppelwand 7 des Ofengehäuses 1 zu erstrecken, und jeweils auf der der seitlichen Doppelwand 6 bzw. 7 abgewandten Seite mit einer Reihe von Luftaustrittsbohrungen 22 versehen, welche vor den spaltförmigen Lücken 89 bzw. 90 der linken Reihe von Querrohren 87 bzw. der rechten Reihe von Querrohren 88 angeordnet sind. Die beiden oberen Rohre 20 zur Verbrennungsluftzufuhr sind oberhalb des zusätzlichen Wärmetauschers J zum Strömungsmittelerhitzen bzw. der oberen Reihe von Querrohren 86 desselben angeordnet, um sich über dieselbe hinweg zu erstrecken, und jeweils mit zwei Reihen von Luftaustrittsbohrungen 22 versehen, nämlich sowohl auf der dem anderen Rohr 20 zur Verbrennungsluftzufuhr zugewandten Seite als auch auf der der benachbarten seitlichen Doppelwand 6 bzw. 7 des Ofengehäuses 1 zugewandten Seite.

## Patentansprüche

1. Ofen, insbesondere zur Verbrennung fester Brennstoffe, mit einer von einem Wärmetauscher (A) zum Erhitzen eines Strömungsmittels, insbesondere Wasser, umschlossenen Brennkammer, welcher die in zwei weiteren Wärmetauschern (B, C) vorgewärmte Verbrennungsluft durch obere und untere waagerechte, perforierte Rohre (20 bzw. 21) hindurch dosiert zuströmt und aus welcher die an den Wärmetauschern (B, C) vorbeistreichenden Rauchgase an zwei voneinander entfernten Stellen durch je einen ersten bzw. zweiten Rauchgaskanal (G bzw. H) sowie einen anschließenden gemeinsamen Rauchgaskanal (I) hindurch mit Hilfe eines Gebläses (D) abgezogen werden, das im gemeinsamen Rauchgaskanal (I) angeordnet ist und dem saugseitig ein Dosierorgan (F) für den Rauchgasdurchsatz im ersten Rauchgaskanal (G) sowie den Rauchgasdurchsatz im zweiten Rauchgaskanal (H) vorgeschaltet ist, dadurch gekennzeichnet, daß

a) der Wärmetauscher (A) zum Strömungsmittelerhitzen als doppelwandiges Ofengehäuse (1) ausgebildet ist,

b) zwei obere Rohre (20) und zwei untere Rohre (21) zur Verbrennungsluftzufuhr vorgesehen sind, welche jeweils durch die rückwärtige Doppelwand (5) des Ofengehäuses (1) hindurch bis in den Bereich von dessen vorderer Doppelwand (4) ragen, innerhalb des Ofengehäuses (1) eine Reihe von entlang der Rohrlängsachse gleichmäßig verteilten, seitlichen Luftaustrittsbohrungen (22) aufweisen und außerhalb des Ofengehäuses (1) an einen gemeinsamen Verteiler (25) mit mindestens einem Dosierorgan (E) für den Luftdurchsatz in den beiden oberen Rohren (20) sowie den Luftdurchsatz in den beiden unteren Rohren (21) angeschlossen sind, und

c) die beiden Wärmetauscher (B, C) zur Verbrennungsluftvorwärmung jeweils von einem Abschnitt (G') des ersten Rauchgaskanals (G) bzw. einem Abschnitt (H') des zweiten Rauchgaskanals (H) sowie einem Luftführungsrohr (30 bzw. 31) gebildet sind, welches im Rauchgaskanalabschnitt (G' bzw. H') angeordnet ist oder den Rauchgaskanalabschnitt (G' bzw. H') mantelartig umschließt, am einen Ende mit der freien Atmosphäre kommuniziert und am anderen Ende mit dem Verteiler (25) verbunden ist.

2. Ofen nach Anspruch 1, dadurch gekennzeichnet, daß die beiden oberen Rohre (20) und die beiden unteren Rohre (21) zur Verbrennungsluftzufuhr über je ein T-Rohrstück (23 bzw. 24) an den Verteiler (25) angeschlossen sind, wobei die beiden T-Rohrstücke (23, 24) mit dem jeweiligen Mittelschenkel (23' bzw. 24') auf einander gegenüberliegenden Seiten in den Verteiler (25) münden und der Verteiler (25) eine mit den beiden Mittelschenkelmündungen (23'', 24'') zusammenwirkende Schwenkklappe (27) als Dosierorgan (E) oder zwei jeweils mit der einen Mittelschenkelmündung (23'') bzw. mit der anderen Mittelschenkelmündung (24'') zusammenwirkende Schwenkklappen (27a, 27b) als Dosierorgane (E) aufweist.

3. Ofen nach Anspruch 1 oder 2, dadurch gekennzeichnet, daß die beiden Luftführungsrohre (30, 31) der Wärmetauscher (B, C) zur Verbrennungsluftvorwärmung über ein T-Rohrstück (32) mit dem Verteiler (25) verbunden sind, welches mit dem Mittelschenkel (32') in den Verteiler (25) mündet.

4. Ofen nach Anspruch 1, 2 oder 3, dadurch gekennzeichnet, daß die beiden Wärmetauscher (B, C) zur Verbrennungsluftvorwärmung unterhalb des Ofengehäuses (1) angeordnet sind und sich von dessen vorderer Doppelwand (4) zu dessen rückwärtiger Doppelwand (5) hin erstrekken.

5. Ofen nach Anspruch 4, dadurch gekennzeichnet, daß die beiden Wärmetauscher (B, C) zur Verbrennungsluftvorwärmung jeweils einen äußeren Gehäusekasten (33 bzw. 34) aufweisen, welcher den zugehörigen Rauchgaskanalabschnitt (G' bzw. H') bildet, über ein nahe der doppelwandigen Decke (3) des Ofengehäuses (1) mündendes Rohr (35 bzw. 36) mit dessen Innenraum (10) kommuniziert, an dem der rückwärtigen Doppelwand (5) des Ofengehäuses (1) benachbarten Ende mit dem gemeinsamen Rauchgaskanal (I) verbunden ist und das zugehörige Luftführungsrohr (30 bzw. 31) umschließt, das U-förmig gebogen ist, sich in Längsrichtung des Gehäusekastens (33 bzw. 34) erstreckt und mit den beiden Enden (30', 30" bzw. 31', 31") durch dessen rückwärtige Stirnwand (37 bzw. 38) nach außen ragt.

6. Ofen nach Anspruch 5, dadurch gekennzeichnet, daß die beiden von den Gehäusekästen (33, 34) in den Innenraum (10) des Ofengehäuses (1) führenden Rohre (35, 36) jeweils neben der vorderen Doppelwand (4) bzw. neben der rückwärtigen Doppelwand (5) des Ofengehäuses (1) in dessen Innenraum (10) münden.

7. Ofen nach Anspruch 6, dadurch gekennzeichnet, daß die beiden von den Gehäusekästen (33, 34) in den Innenraum (10) des Ofengehäuses (1) führenden Rohre (35, 36) jeweils geradlinig verlaufen und an dem der vorderen Doppelwand (4) bzw. an dem der rückwärtigen Doppelwand (5) des Ofengehäuses (1) benachbarten. Ende des zugehörigen Gehäusekastens (33 bzw. 34) in denselben münden, wobei der an dem der rückwärtigen Doppelwand (5) benachbarten Ende mit dem Innenraum (10) des Ofengehäuses (1) kommunizierende Gehäusekasten (34) mit einer senkrechten Trennwand (39) versehen ist, welche sich von der rückwärtigen Stirnwand (38) des Gehäusekastens (34) auf dessen vordere Stirnwand (40) zu erstreckt und den Gehäusekasten (34) in zwei parallele Abteile (34', 34") unterteilt, die im Bereich der vorderen Stirnwand (40) des Gehäusekastens (34) miteinander kommunizieren und jeweils mit dessen Rohr (36) bzw. dem gemeinsamen Rauchgaskanal (I) in Verbindung stehen.

8. Ofen nach Anspruch 6, dadurch gekennzeichnet, daß die beiden von den Gehäusekästen (33, 34) in den Innenraum (10) des Ofengehäuses (1) führenden Rohre (35, 36) jeweils an dem der vorderen Doppelwand (4) des Ofengehäuses (1) benachbarten Ende des zugehörigen Gehäusekastens (33 bzw. 34) in denselben münden, wobei das neben der rückwärtigen Doppelwand (5) des Ofengehäuses (1) in dessen Innenraum (10) mündende Rohr (36) einen vom zugehörigen Gehäusekasten (34) senkrecht nach oben ragenden Abschnitt (36') und einen anschließenden waagerechten Abschnitt (36") aufweist, welcher sich entlang der doppelwandigen Decke (3) des Ofengehäuses (1) auf dessen rückwärtige Doppelwand (5) zu erstreckt.

9. Ofen nach einem der Ansprüche 4 bis 8, dadurch gekennzeichnet, daß die beiden Wärmetauscher (B, C) zur Verbrennungsluftvorwärmung im Abstand voneinander beiderseits eines unterhalb des Ofengehäuses (1) längsbeweglichen Ascheaufnahmebehälters (80) angeordnet sind, über welchem die vordere Doppelwand (4) des Ofengehäuses (1) mit einer mittels einer Tür (15) dicht verschließbaren Ascheentnahmeöffnung (14) versehen ist.

10. Ofen nach Anspruch 1, 2 oder 3, dadurch gekennzeichnet, daß die beiden Wärmetauscher (B, C) zur Verbrennungsluftvorwärmung oberhalb des Ofengehäuses (1) angeordnet sind und sich von dessen vorderer Doppelwand (4) zu dessen rückwärtiger Doppelwand (5) hin erstrecken.

11. Ofen nach Anspruch 10, dadurch gekennzeichnet, daß die beiden Wärmetauscher (B, C) zur Verbrennungsluftvorwärmung jeweils ein inneres Rohr (81 bzw. 82) aufweisen, welches den ersten Rauchgaskanal (G) bzw. den zweiten Rauchgaskanal (H) bildet, am einen Ende nahe der doppelwandigen Decke (3) des Ofengehäuses (1) neben dessen vorderer Doppelwand (4) in dessen Innenraum (10) mündet, am anderen Ende mit dem gemeinsamen Rauchgaskanal (I) in Verbindung steht und zwischen den beiden Enden vom zugehörigen Luftführungsrohr (30 bzw. 31) mantelartig umschlossen ist.

12. Ofen nach einem der vorstehenden Ansprüche, wobei eine Einrichtung zum dosierten Wassereinsprühen in die Brennkammer vorgesehen ist, dadurch gekennzeichnet, daß

a) eine Einspritzdüse (42) im Innenraum (10) des Ofengehäuses (1) nahe der doppelwandigen Decke (3) desselben und etwa in deren Mitte angeordnet ist, welche über ein Rohr (43) mit einem elektromagnetisch betätigbaren Ventil (46) zur Steuerung der Wasserzufuhr verbunden ist, und

b) zwei Sensoren (47, 48) zur Erfassung der Temperatur des aus dem doppelwandigen Ofengehäuse (1) austretenden Strömungsmittels bzw. der Temperatur im Innenraum (10) des Ofengehäuses (1) vorgesehen sind, welche an eine elektrische Regelschaltung (49) zum periodischen Öffnen des Ventils (46) der Einspritzdüse (42) mit einem Tastverhältnis entsprechend den jeweiligen Istwerten und den eingestellten Sollwerten der Strömungsmittelaustrittstemperatur sowie der Innenraumtemperatur unter Berücksichtigung der eingestellten Brennstoffqualität angeschlossen sind.

13. Ofen nach Anspruch 12, dadurch gekennzeichnet, daß die Einspritzdüse (42) so ausgebildet und angeordnet ist, daß sie einen flachen Wasserstrahl entlang der senkrechten Mittelebene zwischen den beiden seitlichen Doppelwänden (6, 7) des Ofengehäuses (1) versprüht.

14. Ofen nach Anspruch 12 oder 13, dadurch gekennzeichnet, daß das Rohr (43) der Einspritzdüse (42) zu letzterer hin ansteigt.

15. Ofen nach Anspruch 12, 13 oder 14, dadurch gekennzeichnet, daß das Rohr (43) der Einspritzdüse (42) von einem mit Kühlluft beaufschlagbaren Mantelrohr (44) umschlossen ist.

16. Ofen nach einem der Ansprüche 12 bis 15, dadurch gekennzeichnet, daß im gemeinsamen Rauchgaskanal (I) ein Unterdruckschalter (64) angeordnet ist, welcher dem Gebläse (D) saugseitig vorgeschaltet und an die von einem Akkumulator (54) gespeiste elektrische Regelschaltung (49) angeschlossen ist, so daß letztere bei Betätigung des Unterdruckschalters (64) dann, wenn der Unterdruck im gemeinsamen Rauchgaskanal (I) vor dem Gebläse (D) einen vorgegebenen Mindestwert unterschreitet, das Ventil (46) der Einspritzdüse (42) dauernd öffnet und eine Tür (13) mittels eines elektromagnetisch betätigbaren Riegels (65) sperrt, welche eine Brennstoffeingabeöffnung (12) in der vorderen Doppelwand des Ofengehäuses (1) dicht verschließt.

17. Ofen nach einem der vorstehenden Ansprüche, gekennzeichnet durch eine doppelwandige Tür (13) zum dichten Verschließen einer bzw. der Brennstoffeingabeöffnung (12) in der vorderen Doppelwand (4) des Ofengehäuses (1), wobei die Tür (13) von einem Rohr (66) zur Aufnahme eines Gas- oder Ölbrenners durchsetzt ist, das über einen Kranz von Luftdurchtrittsöffnungen (68) mit dem inneren Hohlraum (69) der Tür (13) kommuniziert und dessen äußere Mündung mittels eines Deckels (67) verschlossen ist, welcher zum Einbau des Gas- bzw. Ölbrenners abnehmbar ist, und wobei die Tür (13) mit einer äußeren Luftansaugöffnung (70) versehen ist, welche durch eine Schwencklappe (72) verschlossen ist, die zur Dosierung des Luftdurchsatzes durch die Luftansaugöffnung (70) beim Ofenbetrieb mit dem Gas- bzw. Ölbrenner verstellbar ist.

18. Ofen nach einem der vorstehenden Ansprüche, gekennzeichnet durch einen zusätzlichen Wärmetauscher (J) zum Strömungsmittelerhitzen, welcher sich im Innenraum (10) des Ofengehäuses (1) im Abstand von dessen Innenflächen erstreckt, die Brennkammer begrenzt und an das doppelwandige Ofengehäuse (1) angeschlossen ist, um von dem in demselben strömenden Strömungsmittel durchströmt zu werden.

19. Ofen nach Anspruch 18, dadurch gekennzeichnet, daß der zusätzliche Wärmetauscher (J) zum Strömungsmittelerhitzen kastenförmig ausgebildet ist und vier waagerechnete Eckrohre (84) aufweist, welche von der als lösbarer Deckel ausgebildeten vorderen Doppelwand (4) des Ofengehäuses (1) abstehen und durch vier Reihen zueinander paralleler Querrohre (85 bzw. 86 bzw. 87 bzw. 88) miteinander verbunden sind, die sich jeweils zwischen zwei einander benachbarten Eckrohren (84) erstrecken.

20. Ofen nach einem der vorstehenden Ansprüche, dadurch gekennzeichnet, daß die beiden unteren Rohre (21) zur Verbrennungsluftzufuhr jeweils oberhalb des doppelwandigen Bodens (2) des Ofengehäuses (1) bzw. der unteren Reihe von Querrohren (85) des zusätzlichen Wärmetauschers (J) zum Strömungsmittelerhitzen in der Nähe des Bodens (2) bzw. der Reihe von Querrohren (85) neben der einen seitlichen Doppelwand (6) bzw. der anderen seitlichen Doppelwand (7) des Ofengehäuses (1) angeordnet und mit einer Reihe von Luftaustrittsbohrungen (22) auf der der benachbarten seitlichen Doppelwand (6 bzw. 7) abgewandten Seite versehen sind.

21. Ofen nach Anspruch 20 in Verbindung mit Anspruch 19, dadurch gekennzeichnet, daß die Luftaustrittsbohrungen (22) der beiden unteren Rohre (21) zur Verbrennungsluftzufuhr vor den Lücken (89 bzw. 90) der benachbarten seitlichen Reihe von Querrohren (87 bzw. 88) des zusätzlichen Wärmetauschers (D) zum Strömungsmittelerhitzen angeordnet sind.

22. Ofen nach Anspruch 20 oder 21, dadurch gekennzeichnet, daß die beiden oberen Rohre (20) zur Verbrennungsluftzufuhr oberhalb des höchsten Brennstoffniveaus im Ofengehäuse (1) bzw. oberhalb des zusätzlichen Wärmetauschers (J) zum Strömungsmittelerhitzen in geringerem gegenseitigen Abstand als die unteren Rohre (21) zur Verbrennungsluftzufuhr angeordnet und mindestens auf den beiden einander zugewandten Seiten mit je einer Reihe von Luftaustrittsbohrungen (22) versehen sind.

**Revendications**

1. Four, notamment pour la combustion de combustibles solides, comprenant une chambre de combustion entourée d'un échangeur de chaleur (A) servant à chauffer un fluide circulant, notamment de l'eau, dans laquelle l'air comburant préchauffé dans deux autres échangeurs de chaleur (B, C) arrive à un débit dosé, en passant par des tubes perforés, horizontaux, supérieur(s) et inférieur(s) (20 et 21 respectivement) et à partir de laquelle les gaz de fumée, qui lèchent les échangeurs de chaleur (B, C) sont prélevés en deux zones éloignées l'une de l'autre, en passant par un premier et un deuxième canaux de gaz de fumée respectifs (G et H respectivement), ainsi que par un canal de gaz de fumée commun (I) qui s'y raccorde, sous l'action d'un ventilateur (D) qui est agencé dans le canal de gaz de fumée commun (I) et en amont duquel est agencé, côté aspiration, un organe doseur (F) pour le débit des gaz de fumée passant dans le premier canal de gaz de fumée (G) ainsi que pour le débit des gaz de fumée passant dans le deuxième canal de gaz de fumée (H), caractérisé en ce que :

(a) l'échangeur de chaleur (A) servant à chauffer le fluide circulant est constitué par une enveloppe de four (1) à double paroi,

(b) il est prévu deux tubes supérieurs (20) et deux tubes inférieurs (21) pour l'arrivée de l'air comburant, qui pénètrent chacun au travers de la double paroi arrière (5) de l'enveloppe (1) du four jusque dans la région de la double paroi avant (4) de cette enveloppe, présentent chacun à l'intérieur de l'enveloppe (1) du four une rangée de perçages latéraux de sortie d'air (22) répartis uniformément le long de l'axe longitudinal du tube et sont raccordés chacun à l'extérieur de l'enveloppe (1) du four à un distributeur commun (25) qui possede au moins un organe de dosage (E) agissant sur le débit d'air qui passe dans les deux tubes supérieurs (20) et sur le débit d'air qui passe dans les deux tubes inférieurs (21) et,

c) les deux échangeurs de chaleur (B, C) servant au préchauffage de l'air comburant sont formés chacun par un segment (G') du premier canal de gaz de fumée (G) ou par un segment (H') du deuxième canal de gaz de fumée (H), ainsi que par un tube de guidage de l'air (30 ou 31) qui est agencé dans le segment de canal de gaz de fumée (G' ou H') ou entoure le segment de canal de gaz de fumée (G' ou H') à la façon d'une robe et communique avec l'atmosphère libre à une première extrémité tandis qu'il est relié au distributeur (25) à l'autre extrémité.

2. Four selon la revendication 1, caractérisé en ce que les deux tubes supérieurs (20) et les deux tubes inférieurs (21) servant pour l'arrivée de l'air comburant sont raccordés au distributeur (25), chacune paire par un élément tubulaire en T (23 ou 24), les deux éléments tubulaires en T (23, 24) débouchant dans le distributeur (25) par leur branche centrale respective (23' ou 24') sur deux côtés mutuellement opposés, et le distributeur (25) présentant un volet oscillant (27) coopérant avec les deux orifices des branches centrales (23'', 24''), pour servir d'organe de dosage (E), ou deux volets oscillants (27a, 27b), dont chacun coopère avec l'orifice (23'') de l'une branche centrale ou avec l'orifice (24'') de l'autre branche centrale pour servir d'organes de dosage (E).

3. Four selon la revendication 1 ou 2, caractérisé en ce que les deux tubes de guidage de l'air (30, 31) des échangeurs de chaleur (B, C) servant au préchauffage de l'air comburant sont reliés au distributeur (25) par un élément tubulaire en T (32) qui débouche dans le distributeur (25) par sa branche centrale (32').

4. Four selon la revendication 1, 2 ou 3, caractérisée en ce que les deux échangeurs de chaleur (B, C) servant au préchauffage de l'air comburant sont disposés audessous de l'enveloppe (1) du four et s'étendent de la double paroi avant (4) de cette enveloppe jusqu'à sa double paroi arrière (5).

5. Four selon la revendication 4, caractérisé en ce que les deux échangeurs de chaleur (B, C) servant au préchauffage de l'air comburant présentent chacun un caisson d'enveloppe extérieur (33 ou 34) qui forme le segment de canal de gaz de fumée correspondant (G' ou H'), communique, par l'intermédiaire d'un tube (35 ou 36) débouchant à proximité du plafond à double paroi (3) de l'enveloppe (1) du four, avec le volume intérieur (10) de cette enveloppe, est relié, à son extrémité adjacente à la double paroi arrière (5) de l'enveloppe (1) du four, au canal de gaz de fumée commun (I), et entoure le tube de guidage d'air correspondant (30 ou 31), lequel est recourbé en U, s'étend dans la direction longitudinale du caisson d'enveloppe (33 ou 34) et émerge à l'extérieur par ses deux extrémités (30', 30'' et 31', 31''), au travers de la paroi frontale arrière (37 ou 38) de ce caisson.

6. Four selon la revendication 5, caractérisé en ce que les deux tubes (35, 36) qui conduisent des caissons d'enveloppe (33, 34) dans le volume intérieur (10) de l'enveloppe (1) du four débouchent dans le volume intérieur (10) l'un à proximité de la double paroi avant (4) et l'autre à proximité de la double paroi arrière (5) de l'enveloppe (1) du four.

7. Four selon la revendication 6, caractérisé en ce que les deux tubes (35, 36) qui conduisent des caissons d'enveloppe (33, 34) dans le volume intérieur (10) de l'enveloppe (1) du four s'étendent chacun en ligne droite et débouchent dans le caisson d'enveloppe correspondant (33 ou 34) l'un à l'extrémité de son caisson adjacente à la double paroi avant (4) et l'autre à l'extrémité de son caisson adjacente à la double paroi arrière (5) de l'enveloppe (1) du four, le caisson d'enveloppe (34) qui communique avec le volume intérieur (10) de l'enveloppe (1) du four à l'extrémité adjacente à la double paroi arrière (5) étant muni d'une cloison verticale (39) qui s'étend de la paroi frontale arrière (38) du caisson d'enveloppe (34) jusqu'à la paroi frontale avant (40) de ce caisson, et divise le caisson d'enveloppe (34) en deux compartiments parallèles (34', 34'') qui communiquent entre eux dans la région de la paroi frontale avant (40) du caisson d'enveloppe (34) et sont en communication, l'un avec son tube (36) et l'autre avec le canal de gaz de fumée commun (I).

8. Four selon la revendication 6, caractérisé en ce que les deux tubes (35, 36) qui conduisent des caissons d'enveloppe (33, 34) dans le volume intérieur (10) de l'enveloppe (1) du four débouchent dans leur caisson d'enveloppe respectif (33 ou 34), à l'extrémité de ce caisson qui est adjacente à la double paroi avant (4) de l'enveloppe (1) du four, le tube (36) qui débouche dans le volume intérieur (10) de l'enveloppe (1) du four à proximité de la double paroi arrière (5) de cette enveloppe présentant un segment (36') s'étendant verticalement vers le haut à partir du caisson d'enveloppe respectif (34) et un segment horizontal (36'') qui y fait suite et qui s'étend le long du plafond à double paroi (3) de l'enveloppe (1) du four, vers la double paroi arrière (5) de cette enveloppe.

9. Four selon une des revendications 4 à 8, caractérisé en ce que les deux échangeurs de chaleur (B, C) servant au préchauffage de l'air comburant sont disposés à un certain écartement l'un de l'autre, de part et d'autre d'un récipient (80) de réception des cendres qui peut se déplacer longitudinalement au-dessous de l'enveloppe (1) du four, récipient au-dessus duquel la double paroi avant (4) de l'enveloppe (1) du four est munie d'une ouverture (14) d'extraction des cendres qui peut être obturée hermétiquement à l'aide d'une porte (15).

10. Four selon la revendication 1, 2 ou 3, caractérisé en ce que les deux échangeurs de chaleur (B, C) servant au préchauffage de l'air comburant sont disposés au-dessus de l'enveloppe (1) du four et s'étendent de la double paroi avant (4) de cette enveloppe à sa double paroi arrière (5).

11. Four selon la revendication 10, caractérisé en ce que les deux échangeurs de chaleur (B, C) servant au préchauffage de l'air comburant présentent chacun un tube intérieur (81 ou 82) qui forme le premier canal de gaz de fumée (G) ou le deuxième canal de gaz de fumée (H), débouche dans le volume intérieur (10) de l'enveloppe (1) du four à une extrémité proche du plafond à double paroi (3) de l'enveloppe (1) du four, à côté de la double paroi avant (4) de cette enveloppe, est en liaison à l'autre extrémité avec le canal de gaz de fumée commun (I) et est entouré à la façon d'une robe par le tube de guidage d'air correspondant (30 ou 31) entre les deux extrémités.

12. Four selon une des revendications précédentes, dans lequel il est prévu un dispositif servant pour la pulvérisation d'eau dosée dans la chambre de combustion, caractérisé en ce que

a) une buse de pulvérisation (42) est agencée dans le volume intérieur (10) de l'enveloppe (1) du four à proximité du plafond à double paroi (3) de cette enveloppe et à peu près au milieu de ce plafond, laquelle buse est reliée par l'intermédiaire d'un tube (43) à une vanne (46) à commande électromagnétique prévue pour la commande de l'arrivée d'eau, et

b) il est prévu deux capteurs (47, 48) destinés à capter la température du fluide circulant sortant de l'enveloppe à double paroi (1) du four et la température régnant dans le volume intérieur (10) de l'enveloppe (1) du four, qui sont connectés à un circuit régulateur électrique (49) servant à ouvrir périodiquement la vanne (46) de la buse de pulvérisation (42) avec un coefficient d'utilisation ou rapport d'impulsions qui correspond aux valeurs réelles existantes et aux valeurs de consigne ajustées de la température de sortie du fluide circulant et de la température du volume intérieur, compte tenu de la qualité de combustible ajustée.

13. Four selon la revendication 12, caractérisé en ce que la buse de pulvérisation (42) est constituée et agencée de manière à projeter un jet d'eau plat le long du plan médian vertical entre les deux doubles parois latérales (6, 7) de l'enveloppe (1) du four.

14. Four selon la revendication 12 ou 13, caractérisé en ce que le tube (43) de la buse de pulvérisation (42) s'élève pour atteindre cette buse.

15. Four selon la revendication 12, 13 ou 14, caractérisé en ce que le tube (43) de la buse de pulvérisation (42) est entouré par un tube enveloppant (44) qui est alimenté en air de refroidissement.

16. Four selon une des revendications 12 à 15, caractérisé en ce que, dans le canal de gaz de fumée commun (I) est agencé un interrupteur à vide (64) qui est monté en amont du ventilateur (D), côté aspiration, et est connecté au circuit régulateur électrique (49) alimenté par un accumulateur (54), de sorte que, lors de la mise en action de l'interrupteur à vide (64), lorsque le vide dans le canal de gaz de fumée commun (I) tombe au-dessous d'une valeur minimum prédéterminée en amont du ventilateur (D), le circuit régulateur ouvre en permanence la vanne (46) de la buse de pulvérisation (42) et bloque, à l'aide d'un verrou à commande électromagnétique (65) und porte (13) qui obture hermétiquement une ouverture de chargement de combustible (12) pratiquée dans la double paroi avant de l'enveloppe (1) du four.

17. Four selon une des revendications précédentes, caractérisé par une porte à double paroi (13) destinée à obturer hermétiquement une ouverture ou l'ouverture (12) de chargement du combustible qui est pratiquée dans la double paroi avant (4) de l'enveloppe (1) du four, la porte (13) étant traversée par un tube (66) servant à recevoir un brûleur à gaz ou à mazout, qui communique avec le volume intérieur (69) de la porte (13) par une couronne d'ouvertures de passage d'air (68), et dont l'orifice extérieur est obturé au moyen d'un couvercle (67) qui peut être enlevé pour le montage du brûleur à gaz ou à mazout, et la porte (13) étant munie d'une ouverture extérieure d'aspiration d'air (70), qui est fermée par un volet oscillant (72) dont on peut régler la position pour le dosage du débit du courant d'air passant à travers l'ouverture d'aspiration d'air (70) lorsque le four est alimenté, soit au gaz, soit au mazout.

18. Four selon une des revendications précédentes, caractérisé par un échangeur de chaleur supplémentaire (J) servant au chauffage du fluide circulant, qui s'étend dans le volume intérieur (10) de l'enveloppe (1) du four, à distance des surfaces intérieures de cette enveloppe, qui limite la chambre de combustion et est raccordé à l'enveloppe à double paroi (1) du four, pour être parcouru par le fluide circulant qui circule dans cette enveloppe.

19. Four selon la revendication 18, caractérisé en ce que l'échangeur de chaleur supplémentaire (J) servant au chauffage du fluide circulant est en forme de caisson et présente quatre tubes d'angle horizontaux (84) qui émergent de la double paroi avant (4) de l'enveloppe (1) du four, laquelle forme un couvercle amovible, et sont reliés entre eux par quatre rangées de tubes transversaux parallèles entre eux (85, 86, 87 et 88) dont chacune s'étend entre deux tubes d'angle (84) mutuellement adjacents.

20. Four selon une des revendications précédentes, caractérisé en ce que les deux tubes inférieurs (21) servant à l'arrivée d'air comburant sont disposés audessus du fond à double paroi (2) de l'enveloppe (1) du four ou au-dessus de la rangée inférieure de tubes transversaux (85) de l'échangeur de chaleur supplémentaire (J) servant au chauffage du fluide circulant, dans le voisinage du fond (2) ou de la rangée de tubes transversaux (85) l'un à côté d'une double paroi latérale (6) de l'enveloppe (1) du four et l'autre à côté de l'autre double paroi latérale (7) de l'enveloppe (1) du four, et sont munis chacun d'une rangée de perçages de sortie d'air (22) sur le côté qui est à l'opposé de la double paroi latérale (6 ou 7) adjacente.

21. Four selon la revendication 20, en combinaison avec la revendication 19, caractérisé en ce que les perçages de sortie d'air (22) des deux tubes inférieurs (21) servant à l'arrivée d'air comburant sont disposés devant les intervalles entre tubes (89 et 90) de la rangée latérale voisine de tubes transversaux (87 ou 88) de l'échangeur de chaleur supplémentaire (J) servant au chauffage du fluide circulant.

22. Four selon la revendication 20 ou 21, caractérisé en ce que les deux tubes supérieurs (20) servant à l'arrivée d'air comburant sont disposés au-dessus du niveau maximum du combustible dans l'enveloppe (1) du four ou au-dessus de l'échangeur de chaleur supplémentaire (J) servant au chauffage du fluide circulant, à un plus petit écartement mutuel que les tubes inférieurs (21) d'arrivée de l'air comburant, et sont munis chacun d'une rangée de perçages de sortie d'air (22), au moins sur les deux côtés dirigés l'un vers l'autre.

**Claims**

1. Oven, in particular for burning solid fuels, with a combustion chamber surrounded by a heat exchanger (A) for heating a flowing medium, in particular water, the chamber having fed to it the combustion air, pre-heated in two further heat exchangers (B, C), through upper and lower horizontal perforated pipes (20 and 21) in regulated amounts, and from which the flue gases passing over the heat exchangers (B, C) are drawn off at two mutually separate points through respectively a first and a second flue gas passage (G and H) as well as a subsequent common flue gas passage (I) with the aid of a fan (D), which is arranged in the common flue gas passage (I) and which is preceded on the suction side by a regulating device (F) for the flue gas flow in the first flue gas passage (G) and the flue gas flow in the second flue gas passage (H), characterised in that

a) the heat exchanger (A) for heating the flowing medium is in the form of a double-walled oven housing (1),

b) two upper pipes (20) and two lower pipes (21) are provided for the supply of combustion air, each projecting through the rear double wall (5) of the oven housing (1) to the region of its front double wall (4), and which each have within the oven housing (1) a row of lateral air outlet bores (22) distributed uniformly along the axis of the pipe and outside the oven housing (1) are connected to a common distributor (25) with at least one regulating member (E) for the throughput of air in the two upper pipes (20) and the throughput of air in the two lower pipes (21), and

c) the two heat exchangers (B, C) for pre-heating the combustion air are each formed by a portion (G') of the first flue gas passage (G) and respectively a portion (H') of the second flue gas passage (H) as well as an air conducting pipe (30 and 31) which is arranged in the flue gas passage portion (G' and H') or surrounds the flue gas passage portion (G' and H') like a sleeve, said pipe communicating at one end with atmosphere and being connected at the other end to the distributor (25).

2. Oven according to claim 1 characterised in that the two upper pipes (20) and the two lower pipes (21) for supplying combustion air are connected through a respective T-piece (23 or 24) to the distributor (25), the central limbs (23', 24') of the two T-pieces (23, 24) leading into the distributor (25) on mutually opposite sides and the distributor (25) having a pivoting flap (27) cooperating with the two central limb openings (23'', 24'') to form a regulating member (E) or two pivoting flaps (27a, 27b) cooperating respectively with the one central limb opening (23'') and with the other central limb opening (24'') to form regulating members (E).

3. Oven according to claim 1 or 2 characterised in that the two air conducting pipes (30, 31) of the heat exchangers (B, C) for pre-heating the combustion air are connected to the distributor (25) through a T-piece (32) of which the central limb (32') leads into the distributor (25).

4. Oven according to claim 1, 2 or 3 characterised in that the two heat exchangers (B, C) for pre-heating the combustion air are arranged below the oven housing (1) and extend from its front double wall (4) to its rear double wall (5).

5. Oven according to claim 4 characterised in that the two heat exchangers (B, C) for pre-heating the combustion air respectively have an outer housing box (33 and 34) which forms the associated flue gas passage portion (G' or H'), communicates with the oven housing interior (10) through a pipe (35 or 36) opening near the double-walled roof (3) of the oven housing (1), is connected to the common flue gas passage (I) at that end which is adjacent to the rear double wall (5) of the oven housing (1) and encloses the associated air conducting pipe (30 or 31) which is bent to a U-shape, extends in the direction of the length of the housing box (33 or 34) and has its two ends (30', 30'' and 31', 31'') projecting out through the rear end wall (37 or 38) of the housing box.

6. Oven according to claim 5 characterised in that the two pipes (35, 36) leading from the housing boxes (33, 34) into the interior (10) of the oven housing (1) open into the interior (10) respectively adjacent to the front double wall (4) and adjacent to the rear double wall (5) of the oven housing (1).

7. Oven according to claim 6 characterised in that the two pipes (35, 36) leading from the housing boxes (33, 34) into the interior (10) of the oven housing (1) each extend in a straight line and open into the associated housing box (33 or 34) at the end of it which is adjacent to the front double wall (4) and respectively the rear double wall (5) of the oven housing (1), the housing box (34) which communicates with the interior (10) of the oven housing (1) at the end adjacent to the rear double wall (5) being provided with a vertical dividing wall (39) which extends from the rear end wall (38) of the housing box (34) to its front end wall (40) and divides the housing box (34) into two parallel compartments, (34', 34'') which communicate with one another in the region of the front end wall (40) of the housing box (34) and communicate with its pipe (36) and with the common flue gas passage (I) respectively.

8. Oven according to claim 6 characterised in that the two pipes (35, 36) leading from the housing boxes (33, 34) into the interior (10) of the oven housing (1) each open into the associated housing box (33 or 34) at that end of it which is adjacent to the front double wall (4) of the oven housing (1), the pipe (36) which opens into the interior (10) of the oven housing (1) adjacent its rear double wall (5) having a portion (36') extending vertically upwards from the associated housing box (34) and a horizontal portion (36'') which is connected to it and which extends along the double-walled roof (3) of the oven housing (1) to its rear double wall (5).

9. Oven according to one of claims 4 to 8 characterised in that the two heat exchangers (B, C) for pre-heating the combustion air are arranged spaced apart from one another on opposite sides of an ash-receiving container (80) which is movable longitudinally underneath the oven housing (1), and over which the front double wall (4) of the oven housing (1) is provided with an ash-removal opening (14) which can be sealed tight by means of a door (15).

10. Oven according to claim 1, 2 or 3 characterised in that the two heat exchangers (B, C) for pre-heating the combustion air are arranged above the oven housing (1) and extend from its front double wall (4) to its rear double wall (5).

11. Oven according to claim 10 characterised in that the two heat exchangers (B, C) for pre-heating the combustion air each have an inner pipe (81 or 82) which forms the first flue gas passage (G) and respectively the second flue gas passage (H), opens into the interior (10) of the oven housing (1) at one end near its double-walled roof (3) adjacent its front double wall (4), communicates at the other end with the common flue gas passage (I) and is enclosed in a sleeve-like manner between said two ends in the associated air conducting pipe (30 or 31).

12. Oven according to one of the foregoing claims provided with a device for metered spraying of water into the combustion chamber, characterised in that

a) a spray nozzle (42) is arranged in the interior (10) of the oven housing (1) near its double-walled roof (3) and about in the middle of it, said spray nozzle (42) being connected through a pipe (43) to an electro-magnetically actuated valve (46) for controlling the supply of water, and

b) two sensors (47, 48) are provided for respectively determining the temperature of the fluid medium emerging from the double-walled oven housing (1) and the temperature in the interior (10) of the oven housing (1), which sensors are connected to an electric control circuit (49) for periodically opening the valve (46) of the spray nozzle (42) with a pulse duty factor corresponding to the prevailing actual values and the set desired values of the outlet temperature of the flowing medium and the interior temperature taking account of the set fuel quality.

13. Oven according to claim 12 characterised in that the spray nozzle (42) is so constructed and arranged that it sprays a flat water spray along the vertical central plane between the two lateral double walls (6, 7) of the oven housing (1).

14. Oven according to claim 12 or 13 characterised in that the pipe (43) of the spray nozzle (42) rises upwards to the latter.

15. Oven according to claim 12, 13 or 14 characterised in that the pipe (43) to the spray nozzle (42) is enclosed in an outer pipe (44) subjected to a flow of cooling air.

16. Oven according to one of claims 12 to 15 characterised in that there is arranged in the common flue gas passage (I) a vacuum switch (64) which is disposed ahead of the fan (D) on its suction side and is connected to the electric control circuit (49) fed from a current source (54) so that on actuation of the vacuum switch (64) when the vacuum in the common flue gas passage (I) ahead of the fan (D) drops below a predetermined minimum value, the circuit holds the valve (46) of the spray nozzle (42) open continuously and by means of an electro-magnetically actuated lock (65), locks a door (13) which tightly closes off a fuel feed opening (12) in the front double wall of the oven housing (1).

17. Oven according to one of the foregoing claims characterised by a double-walled door (13) for tightly sealing off a or the fuel feed opening (12) in the front double wall (4) of the oven housing (1), the door (13) having passing through it a pipe (66) for receiving a gas or oil burner which communicates with the inner cavity (69) of the door (13) through a ring of air openings (68) and of which the outer opening is closed by means of a cover (67) which is detachable for insertion of the gas or oil burner, and the door (13) being provided with an outer air intake opening (70) which is closed by a pivoting flap (72) which is adjustable for regulating the throughput of air through the air intake opening (70) when the oven is operated with the gas or oil burner.

18. Oven according to one of the foregoing claims characterised by an additional heat exchanger (J) for heating the flowing medium, which extends in the interior (10) of the oven housing (1), spaced from its inner surfaces, limits the combustion chamber and is connected to the double-walled oven housing (1) so as to be traversed by the flowing medium flowing in the latter.

19. Oven according to claim 18 characterised in that the additional heat exchanger (J) for heating the flowing medium is a box-shaped construction and has four horizontal corner pipes (84) which project from the front double wall (4) of the oven housing (1), formed as a detachable cover, and are connected together by four rows of mutually parallel transverse pipes (85 and 86 and 87 and 88), which each extend between two adjacent corner pipes (84).

20. Oven according to one of the foregoing claims characterised in that the two lower pipes (21) for supplying combustion air are each arranged above the double-walled floor (2) of the oven housing (1) in the neighbourhood of the floor (2) or above the lower row of transverse pipes (85) of the additional heat exchanger (J) for heating the flowing medium in the neighbourhood of the row of transverse pipes (85) adjacent to the one lateral double wall (6) and respectively the other lateral double wall (7) of the oven housing (1), and are each provided with a row of air outlet openings (22) on that side which faces away from the adjacent lateral double wall (6 or 7).

21. Oven according to claim 20 in conjunction with claim 19 characterised in that the air outlet openings (22) of the two lower pipes (21) for supplying combustion air are arranged opposite the gaps (89 and 90) in the adjacent lateral rows of transverse pipes (87 and 88) of the additional heat exchanger (J) for heating the flowing medium.

13

22. Oven according to claim 20 or 21 characterised in that the two upper pipes (20) for supplying combustion air are arranged above the highest fuel level in the oven housing (1) or above the additional heat exchanger (J) for heating the flowing medium, at a smaller mutual spacing than the lower pipes (21) for supplying combustion air, and are provided with a respective row of air outlet openings (22) at least on the two mutually facing sides.

14

Fig. 1

Fig. 2

Fig. 3

Fig. 4

Fig. 5

Fig. 6

Fig. 7

7

Fig. 8

Fig. 9

Fig. 10

Fig . 11